(19) **Europäisches Patentamt / European Patent Office / Office européen des brevets**

(11) **EP 4 572 425 A1**

(12) **EUROPEAN PATENT APPLICATION**
published in accordance with Art. 153(4) EPC

(43) Date of publication:
**18.06.2025 Bulletin 2025/25**

(21) Application number: **23853106.5**

(22) Date of filing: **09.08.2023**

(51) International Patent Classification (IPC):
*H04W 52/02* (2009.01)   *H04W 68/02* (2009.01)
*H04L 5/00* (2006.01)   *H04W 56/00* (2009.01)

(52) Cooperative Patent Classification (CPC):
**H04L 5/00; H04W 52/02; H04W 56/00;**
**H04W 68/02;** Y02D 30/70

(86) International application number:
**PCT/KR2023/095036**

(87) International publication number:
**WO 2024/035241 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.08.2022 KR 20220100976**

(71) Applicant: **LG Electronics Inc.**
**Yeongdeungpo-gu**
**Seoul 07336 (KR)**

(72) Inventors:
• **HWANG, Seunggye**
  **Seoul 06772 (KR)**
• **YANG, Suckchel**
  **Seoul 06772 (KR)**
• **KIM, Seonwook**
  **Seoul 06772 (KR)**
• **MYUNG, Sechang**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING AND RECEIVING WIRELESS SIGNAL IN WIRELESS COMMUNICATION SYSTEM**

(57)    A method for receiving a signal by a terminal (UE) in a wireless communication system according to an example of the present disclosure may comprise: receiving a network energy saving (NES)-related configuration from a network; and monitoring downlink control information (DCI) on the basis of a discontinuous reception (DRX) cycle in a radio resource control (RRC) idle/inactive state, wherein a time interval in which the NES-related configuration is to be applied in the RRC idle/inactive state is determined on the basis of an integer multiple of the DRX cycle.

**FIG. 14**

Receive NES-related configuration — A05

Monitor DCI based on DRX cycle — A10

## Description

### TECHNICAL FIELD

The present disclosure relates to a wireless communication system, and more particularly, to a method and apparatus for transmitting and receiving a wireless signal.

### BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method and apparatus for efficiently performing a wireless signal transmission/reception procedure.
Other technical objects may be derived from embodiments disclosed in the detailed description.

### TECHNICAL SOLUTION

According to an aspect, a method of receiving a signal by a user equipment (UE) in a wireless communication system may include receiving a network energy saving (NES)-related configuration from a network, and monitoring downlink control information (DCI) based on a discontinuous reception (DRX) cycle in an radio resource control (RRC) idle/inactive state. A time period in which the NES-related configuration is to be applied in the RRC idle/inactive state may be determined based on an integer multiple of the DRX cycle.
A length of the time period in which the NES-related configuration is to be applied may be an integer multiple of a length of the DRX cycle.
The DCI may be DCI for paging, and the DRX cycle may be a period in which the UE monitors a paging occasion (PO).
In the integer multiple of the DRX cycle, the multiple may be determined based on signaling from the network.
A start of the time period in which the NES-related configuration is to be applied may be determined based on a PO monitored by the UE.
The time period in which the NES-related configuration is to be applied may be configured based on a discontinuous pattern in a time domain.
The DCI may include information about an NES-related operation to be performed by the UE in the RRC idle/inactive state. The UE may receive a paging early indication (PEI) for early indicating whether the information about the NES-related operation is included in the DCI.
The UE may receive a PEI for early indicating whether the UE is to monitor the DCI. The PEI may include information about an NES-related operation to be performed by the UE in the RRC idle/inactive state.
According to another aspect, a computer-readable recording medium recording a program for performing the above-described method of receiving a signal may be provided.
According to another aspect, a UE for performing the above-described method of receiving a signal may be provided.
According to another aspect, a device for controlling a UE performing the above-described method of receiving a signal may be provided.
According to another aspect, a method of transmitting a signal by a base station (BS) in a wireless communication system may include transmitting a NES-related configuration, and transmitting DCI based on a DRX cycle to a UE in an RRC idle/inactive state. A time period in which the NES-related configuration is to be applied for the UE in the RRC idle/inactive state may be determined based on an integer multiple of the DRX cycle.
According to another aspect, a BS for performing the above-described method of transmitting a signal may be provided.

## ADVANTAGEOUS EFFECTS

According to an embodiment, a signal may be transmitted/received more accurately and more efficiently in a wireless communication system.

Other technical effects may be derived from embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating a DRX-related operation.

FIG. 11 is a diagram illustrating a WUS.

FIG. 12 is a diagram illustrating an NES-related operation of a UE in an RRC idle/inactive state.

FIG. 13 is a diagram illustrating signal transmission/reception in a network system according to an embodiment.

FIG. 14 is a diagram illustrating signal reception of a UE according to an embodiment.

FIG. 15 is a diagram illustrating signal transmission of a BS according to an embodiment.

FIGS. 16 to 19 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

3GPP LTE

- 38.211: Physical channels and modulation

- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and Abbreviations

- 5GC: 5G Core Network
- 5GS: 5G System
- AP: Access Point
- CID: Cell ID
- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

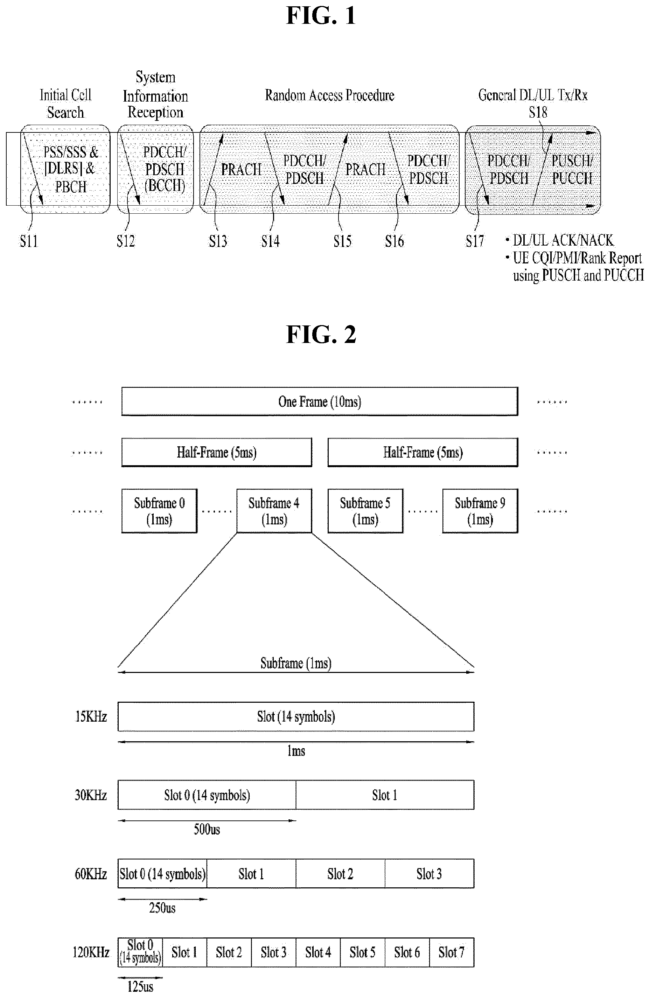

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15 \times 2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15 \times 2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

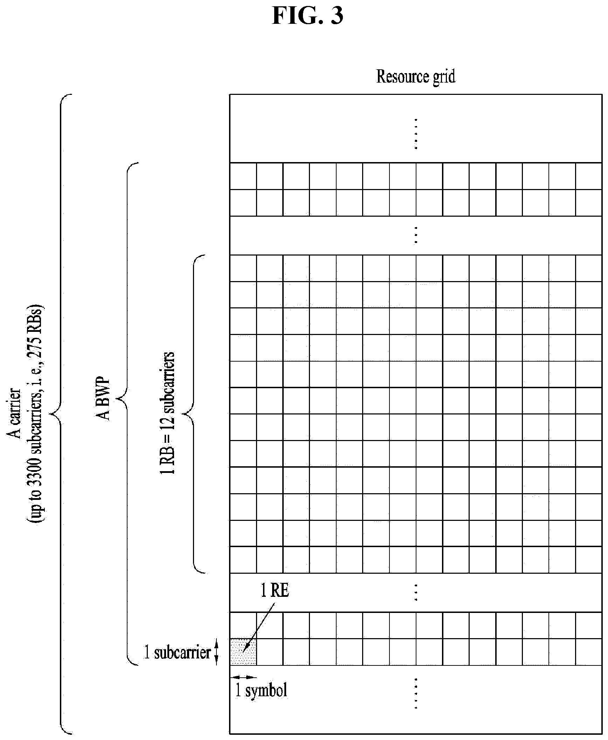

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

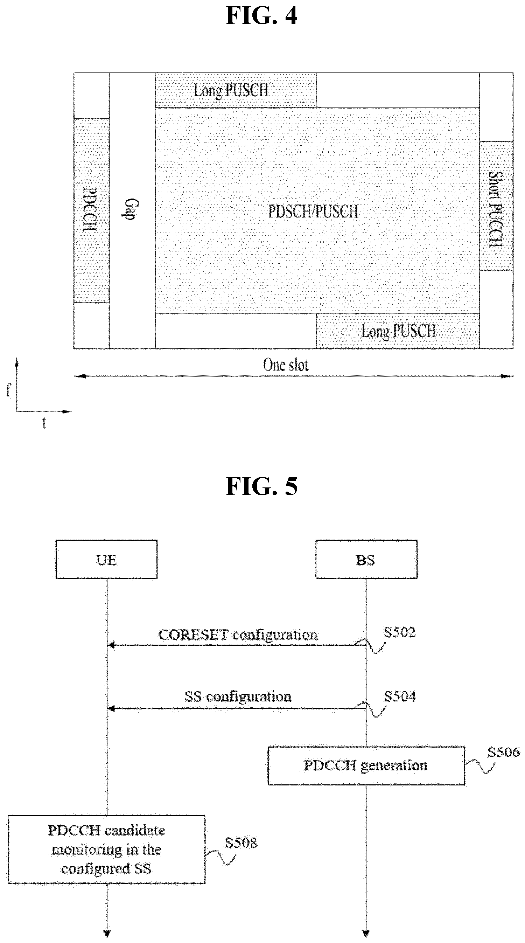

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.

- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS".

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |

(continued)

| Type | Search Space | RNTI | Use Case |
|---|---|---|---|
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

-  Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
-  Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

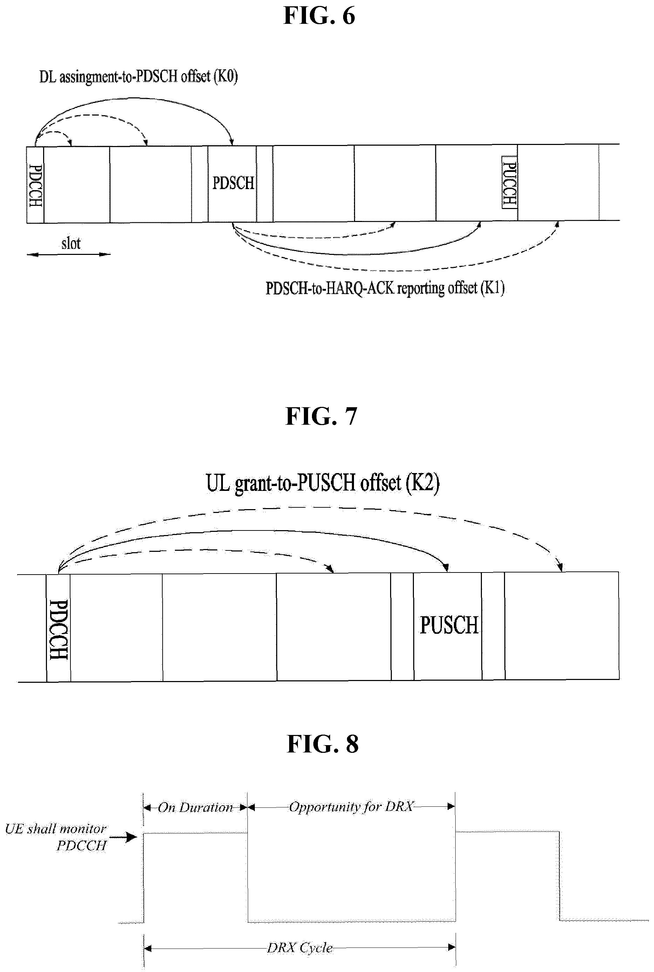

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

-  Frequency domain resource assignment: Indicates an RB set allocated to a PDSCH.
-  Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
-  PDSCH-to-HARQ_feedback timing indicator: Indicates K1.
-  HARQ process number (4 bits): Indicates the HARQ process ID of data (e.g., a PDSCH or TB).

- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bitwise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC _INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC _INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

    1) In the case of CN-initiated paging, a default cycle is broadcast in system information.
    2) In the case of CN-initiated paging, a UE-specific cycle is configured by NAS signaling.
    3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC _INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(SFN + PF\_offset) \bmod T = (T \operatorname{div} N)*(UE\_ID \bmod N)$$

- An index i_s indicating the index of the PO is determined by:

$$i\_s = floor(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC _CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the aforedescribed/proposed procedures and/or methods.

[Table 5]

|  | Type of signals | UE procedure |
|---|---|---|
| 1st step | RRC signalling (MAC-CellGroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

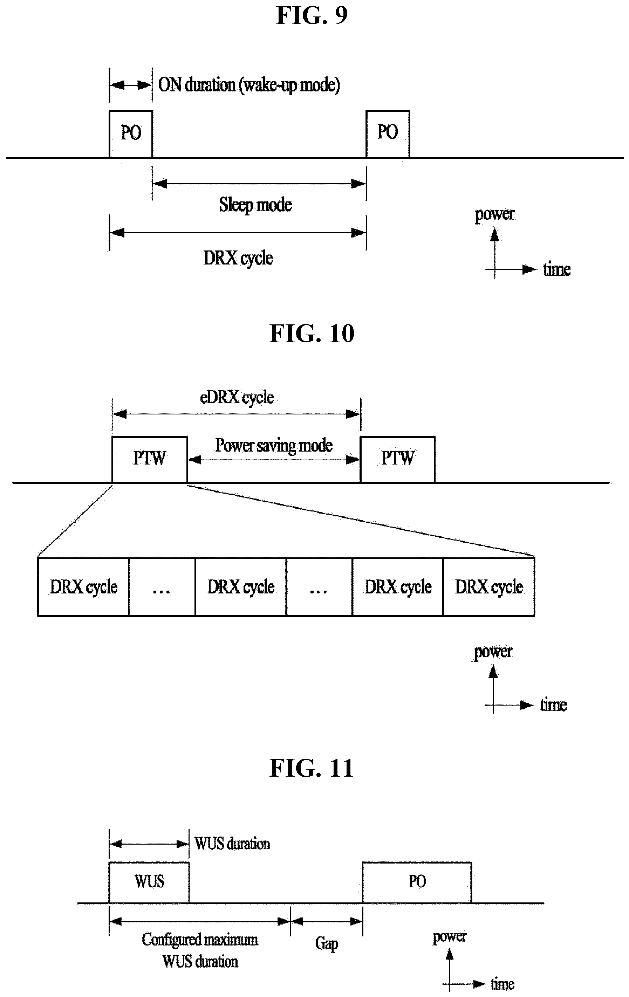

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

## WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

**L1 signaling based Network Energy Saving for idle/inactive UE**

Energy saving of BSs is considered important in wireless communication systems including 3GPP, because it may contribute to building eco-friendly networks and reducing the operational expenditure (OPEX) of communication service providers by reducing carbon emissions. Particularly, since along with the introduction of 5G communication, high transmission rates are required, a BS should be equipped with more antennas and provide services in a wider bandwidth and frequency band. As a result, recent studies have revealed that the energy cost of BSs has reached up to 20% of the total OPEX. Due to the increased interest in BS energy saving, research on network energy savings (NES) is under discussion in 3GPP NR release 18.

Specifically, how to achieve a more efficient operation dynamically and/or semi-statically and finer granularity adaptation of transmissions and/or receptions in one or more of network energy saving techniques in time, frequency, spatial, and power domains are discussed, together with potential assistance/feedback from a UE and potential UE assistance information.

In this context, a BS operation for improving the NES efficiency of a BS is defined, and a UE operation is defined in consideration of the BS operation.

One of methods of supporting an NES operation is to stop all or some of signals or channels provided by the BS during a specific time period. In addition, a method of stopping an operation related to UL reception of a UE during a specific time period by a BS may be similarly considered. When the BS performs an NES operation, the UE may need to have an accurate understanding of assumptions made for transmission and reception of a signal and channel. This is necessary not only to prevent malfunctions that may occur when the UE assumes a signal/channel which is not transmitted, but also to prevent unnecessary power consumption that may occur when the UE repeats an invalid operation.

In 3GPP NR, the UE in an RRC idle or inactive state receives information such as paging from the BS, and when needed, transmit and receive various types of signals and channels to transition to an RRC connected state. As described above, when the BS performs/supports the NES operation, the UE in the idle/inactive state needs to recognize the NES operation of the BS and perform an appropriate operation. Unlike the UE in the connected state, the UE in the idle/inactive state may obtain limited types of signals/channels, and available configuration/indication information may also be limited. Moreover, since the BS and the idle/inactive UE do not maintain a connection with each other, it is difficult to identify the state of the idle/inactive UE, and a feedback from the UE for transmission and reception of information provided by the BS may not be expected, in most cases. Therefore, a method of supporting an NES operation by an idle/inactive UE needs to be distinguished from a method of supporting an NES operation by a connected UE.

Considering the above-mentioned problems, methods of receiving necessary configuration information from a BS which performs an NES operation and performing a related operation by a UE in an idle/inactive state are proposed. The proposed methods have the effect of, when a BS discontinues transmission of a specific signal and channel during a specific time period, allowing a UE to recognize this and thus preventing malfunctions and unnecessary power consumption.

Although a description is made in the context of the characteristics and structure of an NR system and NES, for convenience, which should not be construed as limiting, the proposed methods are applicable to any wireless communication transmission and reception structure and service. One or more of the proposed methods may be applied in combination or independently without being combined. Terms, symbols, and orders may be replaced with other terms, symbols, and orders.

According to an embodiment, a method is proposed in which a BS indicates an NES-related operation (or provides information) to a UE in an idle/inactive state by L1 signaling receivable by the UE, and the UE performs an operation based on the indication.

NES-related information/configuration mentioned in the disclosure may be, for example, information for notifying a UE that a BS temporarily activates/deactivates a signal and channel transmission/reception operation for the purpose of energy saving of the BS, and for being used for the UE to expect reception of a signal and channel transmitted by the BS or supporting transmission of a signal and channel from the UE to the BS. In a specific example, the NES-related information/configuration may include information such as a cell DRX/DRX pattern, and further include activation/deactivation which is based on the type of a signal and channel or which is independent or distinct for UL and DL, and individual detailed operations.

For example, the L1 signaling receivable by the UE in the idle/inactive state may be a PDCCH carrying DCI format 2_7 (hereinafter, referred to as PEI DCI) scrambled with a PEI-RNTI and/or a PDCCH carrying DCI format 1_0 (hereinafter, referred to as paging DCI) scrambled with a P-RNTI. The term, L1 signaling may refer to signaling that the UE in the idle/inactive state may expect to receive, and conceptually cover a PDCCH carrying PEI DCI or paging DCI.

**[Proposal 1] NES support through PEI or paging DCI**

Proposal 1 proposes a method of providing or obtaining an indication and configuration information for an NES operation by using PEI DCI or paging DCI as L1 signaling.

**Option 1-1. Providing NES operation-related information through PEI**

When PEI DCI is used to provide NES information to an idle/inactive UE, the PEI DCI may include a DCI field (hereinafter, referred to as an NES field) including NES information. To this end, the BS may provide configuration information for the NES field using a higher layer signal (e.g. SIB), and the UE may receive it. As an example of a procedure of obtaining NES information based on an NES field configured in PEI DCI by a UE, at least one of the following options 1-1-x may be used.

**(Option 1-1-A) NES field including 1-bit indication**

A 1-bit NES field may be configured in PEI DCI. In this case, the 1-bit information may be used to indicate whether there is NES-related information in paging DCI provided after the PEI DCI. For example, when 1 bit in the PEI DCI indicates 0, the NES-related information may not be included in the paging DCI. When the 1 bit indicates 0, the UE may not need to perform PO monitoring to obtain the NES-related information. When the 1 bit in the PEI DCI indicates 1, the UE may monitor a PO, expecting that the NES-related information may be provided through the paging DCI. The representation of the states of the 1 bit in the above example is only for illustrative purposes, and the states of the 1 bit may be defined in the opposite way. The 1-bit information may be an independent field configured for NES, or may be used as a field indicating to the UE that paging DCI without scheduling of a paging message will be transmitted. The proposed method has an advantage in terms of the payload overhead of the PEI DCI, because it may be indicated to the UE whether NES-related information needs to be obtained, by adding only 1 bit to the PEI DCI.

**(Option 1-1-B) Providing information using multi-bit NES field**

The PEI DCI may include a multi-bit NES field. In this case, the UE may obtain information related to an NES-related operation that may be performed in the idle/inactive state from the NES field of the PEI DCI. When the UE obtains NES-related information from the NES field of the PEI DCI, the UE may determine not to perform PO monitoring to obtain the NES-related information, regardless of whether an NES operation is indicated. In addition, even when the NES-related information is not obtained from the NES field, the UE may determine not to perform PO monitoring to obtain the NES-related information. The proposed method may be advantageous in terms of power saving of the UE by excluding unnecessary PO monitoring, because the UE monitoring a PEI may obtain NES-related information from the PEI.

**(Option b1-1-C) Providing partial information using multi-bit NES field**

The PEI DCI may include a multi-bit NES field, and a part of NES-related information may be included in the NES field. In this case, the UE may obtain a part of information related to an NES-related operation that may be performed in the idle/inactive state from the NES field of the PEI DCI, and when needed, the UE may be configured to monitor a PO to obtain the remaining part. The NES-related information including information not provided in the PEI DCI may be provided in paging DCI in a PO. As a specific example, the following detailed methods may be considered.

In one detailed method, when one of a plurality of NES-related operation candidates is selected and performed, the NES field of the PEI DCI may be limited to only some of the candidates, and the remaining candidates or all candidates may be selected in the paging DCI. This may be an advantageous method for saving the payload overhead of the PEI DCI by not providing NES-related operations that are not frequently used in the PEI DCI, when they exist.

In another detailed method, when the types of NES-related information are classified in detail, the NES field of the PEI DCI may be configured to provide only some of the types, and the paging DCI may be configured to provide the remaining types or all types. When different NES-related information is useful (or required), essential, or has a relatively high priority depending on services or capabilities supported by the UE, or when there is common available NES-related information regardless of capabilities or services, the NES-related information may be provided through the PEI DCI, and the UE may obtain the remaining information through the paging DCI, when needed. Accordingly, the payload overhead of the PEI DCI may be saved in this method.

In a specific method, when the UE obtains NES-related information from the PEI DCI and the obtained information indicates that an NES-related operation will not be performed, the UE may be configured not to perform PO monitoring only for obtaining the NES-related information. When the UE obtains NES-related information from the PEI DCI and the obtained information indicates that an NES-related operation will be performed, the UE may be configured to select whether to monitor a PO as needed.

The method of providing NES-related information using PEI DCI has an advantageous effect in terms of power saving of a UE with PEI capabilities, because an NES operation may be configured for/indicated to the UE without causing a separate transmission/reception operation for transmitting/receiving information by the UE monitoring a PEI.

**Option 1-2. Providing information related to NES operation through paging DCI**

When paging DCI is used to provide NES information to an idle/inactive UE, the paging DCI may include a DCI field (hereinafter, referred to as an NES field) including NES information. To this end, the BS may provide configuration information for the NES field using a higher layer signal (e.g. SIB), and the UE may receive it. The NES field may be configured in the paging DCI, and one of the following options 1-2-x may be selected as a procedure of obtaining NES information based on the NES field by a UE.

**(Option 1-2-A) Configuring field of NES-related information in short message field**

A method of providing NES-related information in a short message field of paging DCI may be used. The proposed method may be used when a short message indicator field indicates a state of "10" (i.e., only a short message is present in the DCI) or a state of "11" (i.e., both scheduling information for paging and a short message are present in the DCI). In this case, the UE may obtain information related to an NES operation from bits in the short message field defined by the standard and indicated by a higher layer signal.

In the case where the proposed method is used when the short message indicator field indicates a state of "01" (i.e., only scheduling information for paging is present in the DCI), the entire short message field may be used to provide and obtain information related to an NES operation.

**(Option 1-2-B) Configuring field of NES-related information using bits other than short message field and short message indicator**

A method of providing NES-related information using bits other than the short message field or the short message indicator field in the paging DCI may be used. The proposed method may be used, when the short message indicator field indicates the state of "01" (i.e., only scheduling information for paging is present in the DCI) or the state of "11" (i.e., both scheduling information for paging and a short message are present in the DCI). In a specific method, reserved bits not used by the fields of the paging DCI may be used, and information related to an NES operation may be obtained from bits indicated by a higher layer signal from the BS.

In the case where the proposed method is used when the short message indicator field indicates the state of "10" (i.e., only a short message is present in the DCI), a method of providing NES-related information may be determined differently from the case where the short message indicator field indicates other states, and this may cause a change in the position and number of used bits. For example, all bits except the short message field or the short message indicator field may be used to provide and obtain information related to an NES operation.

**(Option 1-2-C) Providing NES-related information using short message indicator se to "00"**

When the short message indicator field of the paging DCI indicates "00", a method of providing NES-related information by using all or some of the remaining paging DCI bits except the short message indicator field may be used. This may be for the purpose of providing NES-related information by using more bits without affecting legacy UEs, considering that the state of the short message indicator field being "00" is defined as reserved in the current Rel-17 NR standard, and the case in which the state is indicated is not used.

The method of providing NES-related information using paging DCI as in Proposal 2 may configure/indicate an NES operation without causing a separate transmission/reception operation for transmitting/receiving information at the UE regardless of the UE's capability, thereby obtaining an advantageous effect in terms of versatility and UE power saving.

**[Proposal 2] Determining period in which NES mode is applied**

Proposal 2 proposes a method of determining and applying a period in which an NES mode is applied (hereinafter, referred to as an NES mode period), when the NES mode is applied by L1 signaling. The NES mode refers to a state in which the BS and the UE perform a transmission and reception operation on a signal and channel that may be expected in the idle/inactive state, based on NES-related information.

The proposed method of determining an NES mode period may be determined so that it is commonly applied to all signals and channels which the UE may control in the NES mode in the idle/inactive state or an individual configuration is applied to each signal and channel.

For proposal 2, one or a combination of two or more of the following methods may be used specifically.

## Determination of NES mode period based on length of paging DRX cycle

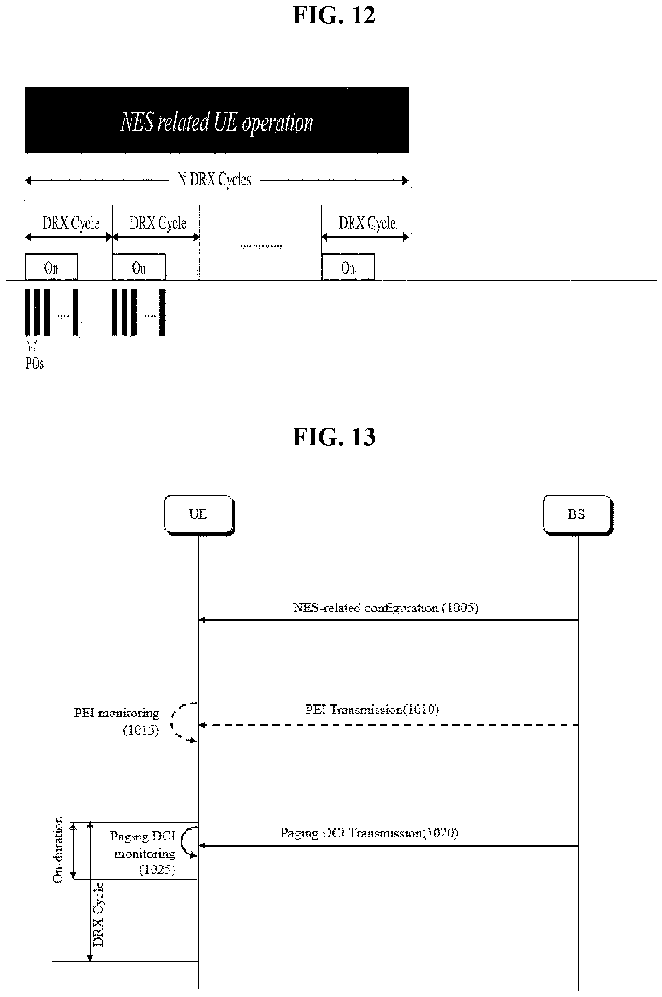

A method may be used in which a time period (NES mode period) in which the NES mode is to be applied is determined based on the length of a paging DRX cycle. In a specific method, the length of the NES mode period may be set to a multiple of the paging DRX cycle. The paging DRX cycle refers to a period in which the UE monitors a PO in the idle/inactive state. Specifically, a cell-common paging DRX cycle configured by an SIB may be used, and even if the UE is configured with a UE-specific paging DRX cycle, the UE may be configured to use the cell-common paging DRX cycle rather than the UE-specific paging DRX cycle. This may be for configuring the same NES mode period for UEs expecting the NES mode from the same BS. For example, referring to FIG. 12, a DRX cycle may be repeated periodically, and the UE may monitor POs in On-durations of the DRX cycle. The UE may monitor paging DCI through a PDCCH having a CRC scrambled with a P-RNTI in a PO (e.g. a modulo operation based on a UE ID) related to the UE among the POs in the On-durations. A time period in which the UE performs an NES-related operation in the RRC idle/inactive state may correspond to the length of N DRX cycles. As described below, the start of the time period in which the NES-related operation is performed may be determined based on a specific PO (e.g., a PO associated with the UE).

The multiple used to determine the length of the NES mode period may be a value determined by the BS and provided to the UE through a higher layer signal (e.g., SIB). In addition, the start position of the NES mode period may be determined based on a PO (or PEI-O) that the UE may expect to monitor based on its UE ID. For example, when the length of the NES mode period is set to N paging DRX cycles, the UE may determine the length of the N paging DRX cycles as the NES mode period, based on a PO (or PEI-O) in which the UE is instructed to perform an NES mode operation or a PO (i.e., a PO indicated to be or not to be monitored by a PEI at a corresponding position) related to a PEI-O in which the UE is instructed to perform an NES mode operation, and perform the configured/indicated operation.

As one of specific methods of determining the start position of an NES mode period by applying the proposed method, a method may be considered in which the UE determines the starting point of the NES mode period by selecting a PO (or PEI-O) of another UE (or of the UE itself) that satisfies a specific condition, rather than the position of a PO (or PEI-O) selectable by its own UE ID. The specific condition may be determined as the position of a PO that may be selected with a periodicity according to a pre-agreed rule among a plurality of operated POs, from the perspective of the BS. This provides an advantageous effect in that the BS may provide a common NES mode period to all UEs.

Since the proposed method configures an NES mode period based on the positions of a PO and a PEI-O and a paging DRX cycle, paging-related parameters may be reused. Accordingly, the proposed method may be advantageous in terms of signaling overhead and also provide a structure favorable for an NES operation related to a PEI and paging.

## Determination of NES mode period based on SFN index

An SFN index-based method may be used to configure an NES mode period. Specifically, the starting point of an NES mode period may be calculated using an offset and a periodicity determined and provided through a higher layer signal (e.g. SIB) by the BS. In addition, the length of the NES mode period may be determined and provided through a higher layer signal (e.g. SIB) by the BS. In this case, the length may be represented in transmission/reception units in the time domain (e.g. in frames, subframes, slots, and symbols) or in units of time such as ms. Alternatively, the length of the NES mode period may be determined by applying a multiple based on a unit length used for other purposes such as a paging DRX cycle. Specifically, the starting point of the NES mode period may be determined as the SFN index of a position close to L1 signaling indicating an NES operation to the UE (e.g., a closest position among previous positions or a closest position that comes next) among the SFN indexes that may be selected based on the offset and periodicity provided by the BS. For example, when an SFN index that satisfies a condition for the start position of the NES mode period after the UE is instructed to perform an NES operation by L1 signaling is frame #n, and the length of the NES mode period obtained from a higher layer signal by the UE is N frames, the UE may assume a range from frame #n to frame #n+N-1 to be the NES mode period and perform the related NES operation.

In a specific example, a method may be considered in which a modification period boundary and the length of a modification period are used as a reference for determining an NES mode period. The modification period boundary and the modification period are concepts used to determine a reference/unit period for updating an SIB, and their definitions may follow the definitions described in the 3GPP TS 38.331 standard. In this case, the UE may be configured to assume that the NES mode period starts from the first modification period boundary after an NES operation is indicated by L1 signaling, and determine to perform the NES operation, assuming that the length of the NES mode period applied at this time is a multiple of the modification period indicated through a higher layer signal by the BS. This may provide a structure favorable for providing UEs with NES capability with an opportunity in which they switch to an NES operation according to a simplified procedure through a dynamic indication of L1 signaling, and at the same time, providing UEs without NES capability with an effect similar to an NES mode period through an SIB update procedure.

The proposed method may have an advantage in that it provides an NES mode period structure suitable for providing a common NES mode period to all UEs to which NES mode periods are indicated by the same BS, and also has an advantage in terms of BS flexibility in that the BS may select the start position and length of a required NES mode period with relatively low constraints.

## Applying pattern of NES mode periods

A structure may be used in which an NES mode period indicated by L1 signaling is generated in a discontinuous pattern. For example, the pattern may have a structure in which an NES mode period and a non-NES mode period are generated alternately. The non-NES mode period may refer to a period in which a configured/indicated NES operation is not performed or a period in which a relaxed NES operation (e.g., some NES operations are deactivated and the remaining NES operations are maintained) is performed. The above pattern may be predetermined by a standard or configured by a BS and provided to the UE by a higher layer signal (e.g. SIB). For example, the pattern may include a structure in which NES mode periods and non-NES mode periods are arranged, and information about the length of each period. In addition, the BS may determine the length of a period during which the pattern is maintained, and the UE may receive it through a higher layer signal (e.g. SIB).

When periodic activation/deactivation of an NES mode period is required or a structure of providing a relaxed NES mode period periodically is required, for the purpose of smoothly supporting a transmission/reception operation of a UE, the proposed method has the advantage of supporting this without generating additional signaling overhead other than an initial L1 signaling indication.

## [Proposal 3] Signal/channel to which NES mode operation is applied

Proposal 3 proposes a transmission and reception operation for signals and channels that an idle/inactive UE may assume and perform, when the NES mode is applied using L1 signaling. In an NES mode period, the UE may be configured to perform an NES operation for a signal and channel for the purpose of a PEI, paging, an SSB, an SIB, random access, measurement, positioning, and SDT, on which the UE may perform transmission and reception and a related operation in the idle/inactive state. As one of NES operations that may be performed, it may be configured that a transmission/reception assumption and a related operation may not be expected or performed for the signal and channel, while the NES mode period is maintained. As another of the NES operations, it may be configured that a transmission/-reception assumption and a related operation may be expected or performed for the signal and channel only in agreed periods or positions (e.g., positions that occur relatively intermittently, compared to non-NES mode periods), while the NES mode period is maintained.

Proposal 3 may include NES operations that may be applied characteristically by considering the characteristics of each signal and channel and a condition required for a related operation. For the characteristic NES operations, the following detailed methods may be considered for each signal and channel.

## PEI and/or Paging

The UE may monitor a PEI-O and a PO to receive a PEI and paging information. It may be advantageous for the BS not to transmit a PEI or paging in an NES mode period, for the purpose of energy saving. Considering this, the UE may determine not to perform monitoring for a PEI and paging during a period in which the NES mode period is applied. For example, when an NES operation is indicated by L1 signaling, the UE may be configured not to expect (not to receive) a PDCCH monitoring operation for receiving a PEI and paging at the positions of a PEI-O and a PO included in an NES mode period.

The proposed method may be a method of determining not to expect to obtain information for a specific purpose through a PEI or a PO. For example, the UE may be configured to expect that a paging message will not be scheduled in the NES mode period. In this case, the UE may be allowed to monitor a PEI-O or a PO as needed (or according to a configuration), and instead, the UE may be configured not to perform an operation related thereto because it does not expect scheduling of a paging message. As an example of the related operation, buffering for PDSCH decoding may be considered, which may provide a beneficial effect in preventing power consumption of the UE caused by buffering a PDSCH while the UE performs PDCCH decoding. As another example for the specific purpose, the UE may be configured to expect that short message information such as an SIB change indication and/or an ETWS/CMAS notification will not be provided in the NES mode period. On the other hand, when allowed (or needed), acquisition of NES-related information of the UE through a PEI and paging may be permitted in a restricted manner. This may include the purpose of allowing monitoring of a PEI and paging so that the BS may control an NES operation more dynamically, when NES-related information is provided through the PEI or the paging, and may be for the purpose of preventing malfunctions that may occur in the UE due to PEI and paging PDCCH missing.

It may be configured that all or part of information for a specific purpose, which is determined not to be expected as in the proposal, is temporarily allowed when a certain condition is satisfied in the NES mode period. For example, it may be configured that the information is provided by the BS at the position of a PEI-O or PO that is periodically allowed within the NES mode period, and is expected by the UE. This may be for the purpose of preventing a situation in which transmission and reception of latency-sensitive information such as a paging message or an ETS/CMAS notification are significantly delayed, when the length of an NES mode period is long, and may also be used for the purpose of providing information about an SIB change to the UE before the UE ends the NES mode period.

## SSB

It may be advantageous for the BS not to transmit an SSB in an NES mode period, for the purpose of energy saving. In consideration of this, the BS may determine not to transmit an SSB in an NES mode period, and the UE may determine not to perform an SSB reception-related operation in consideration of this.

On the other hand, because the UE receives the SSB to perform RRM measurement for a camped-on cell in the idle/inactive state or to set a beam index for transmission/reception of other signals/channels, AGC, time/frequency tracking, and so on, whether or not SSB transmission/reception is assumed may be important for the operation of the UE. Considering this, the BS may be configured to transmit a periodic SSB advantageous in terms of energy saving in the NES mode period. As a specific method of configuring/indicating and transmitting a periodic SSB which is advantageous in terms of energy saving, one of the following options 3-1-x may be selected and used.

### (Option 3-1-A) Skipping SSB indication

In the proposed method, the UE may assume basic SSB transmission and reception at the positions of SSBs configured by an SIB. In order to obtain an additional energy saving effect, the BS may provide the UE with indication information of SSB skipping applicable to an NES mode period. In this case, the UE may be configured not to assume transmission and reception at some of the transmission positions of SSBs configured by the SIB, based on the indicated information. For example, the indication information of SSB skipping may be provided in the form of a pattern represented in a bitmap structure, and/or in the form of indication information about a skipping area that occurs periodically.

### (Option 3-1-B) Conditional SSB transmission

In the proposed method, the UE may assume basic SSB transmission and reception at the positions of SSBs configured by an SIB. It may be configured that in addition to the basic SSB transmission/reception positions, when a specific condition is satisfied, the BS performs a temporary SSB transmission, and the UE expects reception of the SSB by assuming this. To this end, the BS may determine whether to support a temporary SSB and its structure, and provide the UE with configuration information thereof through a higher layer signal (e.g. SIB), and the UE may expect and perform a related operation, when receiving the signal.

The specific condition may include a case where a temporary SSB transmission is activated by another signal or channel. For example, the UE may receive activation information for a temporary SSB transmission through PEI DCI or paging DCI, and identify whether a temporary SSB has been generated through the activation information.

Alternatively, the specific condition may be set such that when the UE may expect/assume transmission/reception of a specific signal or channel, the UE may expect transmission/reception of a temporary SSB at a position determined based on a transmission position of the corresponding signal or channel. For example, the specific signal or channel that the UE may expect/assume may include the position of a PEI-O or PO that the UE is allowed to monitor in an NES mode period, or a monitoring position of a PDCCH and PDSCH for transmitting and receiving an SIB. In another example, when the UE performs a RACH, the position of an RO may be used as a reference position, and when the UE transmits a PRACH, the UE may be configured to expect a temporary SSB transmission based on the position of an RAR window associated with the PRACH.

Although the proposed method has been described based on transmission and reception of a temporary SSB, it will be understood by those skilled in the art that the concept of the proposed method may be applied to other types of reference signals (e.g. CSI/RS or TRS) available to the UE, and achieve a similar benefit.

### (Option 3-1-C) Additional SSB indication

In the proposed method, the UE may assume basic SSB transmission and reception at the positions of SSBs configured in an NES mode period. In addition to the basic SSB transmission and reception positions, the BS may be configured to perform an additional SSB transmission at a position other than the NES mode period, and the UE may expect reception of the SSB, assuming the additional SSB transmission. In this case, it may be configured that it is determined whether to apply the additional SSB based on whether the NES mode period is applied, without a separate enabling/disabling procedure, and the additional SSB is generated periodically. To this end, the BS may determine the periodic positions and structure of the additional SSB and provide configuration information for them to the UE through a higher layer signal (e.g. SIB), and the UE may expect and perform a related operation, when receiving the configuration information.

As the positions of SSBs transmitted in an NES mode period are set as a basic SSB transmission period and additional SSBs are transmitted at other positions, the proposed method provides the effect of network energy saving and at the same time, provide a structure advantageous for a stable operation of general UEs because it allows UEs without NES capability to always assume the same SSB period regardless of the NES mode period.

Although the proposed method has been described based on transmission and reception of an additional SSB, it will be understood by those skilled in the art that a similar benefit may be achieved even when the concept of the proposed method is applied to other types of reference signals (e.g. CSI/RS or TRS) available to the UE.

## SIB

It may be advantageous for the BS not to transmit an SIB in an NES mode period, for the purpose of energy saving. In consideration of this, the BS may determine not to transmit the SIB in the NES mode period, and the UE may determine not to perform an SIB reception-related operation in consideration of this.

In the proposed method, a method of applying a different operation in an NES mode period depending on the type of information provided by an SIB may be considered. In a specific method, the BS may be configured to support periodic SIB transmission for some SIBs regardless of an NES mode period, and the SIBs may include, for example, SIB1 and/or an SIB providing NES-related information. The periodicity of the periodic SIB transmission may be set differently for an NES mode period and a non-NES mode period. The BS may be configured to provide configuration information for the periodicity through a higher layer signal, and the UE may be configured to perform a related operation by receiving the configuration information. Further, in a proposed specific method, it may be configured that whether to support periodic SIB transmissions for SIBs other than the above SIBs is determined depending on an NES mode period and a non-NES mode period. For example, when a periodic SIB transmission structure is configured for a specific SIB-X, it may be configured that transmission and reception of SIB-X between the BS and the UE are allowed only in the non-NES mode period, whereas only SIB-X transmission and reception in an on-demand-based SIB transmission structure is expected without the assumption of the periodic SIB transmission structure in the NES mode period.

And/or in the proposed method, a method may be used in which an SIB transmission time is determined according to an SSB transmission pattern of an NES mode period. In this case, an SIB transmission/reception assumption scheme used in the non-NES mode period and an SIB transmission/reception assumption scheme used in the NES mode period may be different, which may depend on the transmission periodicity or pattern of SSBs. For example, it may be configured that in an SIB transmission/reception allowed period of the NES mode period, a window for SIB transmission/reception is configured based on an SIB transmission/reception period occurring periodically (or according to a pattern) within the NES mode period, and the UE assumes SIB reception only within the corresponding period.

## Random Access

It may be advantageous for the BS not to perform a random access (hereinafter, referred to as RA) procedure in an NES mode period, for energy saving. Considering this, the BS may not support the RA procedure in the NES mode period, and the UE may determine not to perform an RA-related transmission and reception operation in consideration of this.

On the other hand, it may be preferable to allow the RA procedure even in the NES mode period, in consideration of the case where an operation and information that the UE wants to request from the BS occurs or data that needs to be transmitted occurs. Considering this, a method of restrictively allowing the RA procedure in the NES mode period may be considered. For example, the generation periodicity of an RO and an RAR that may be assumed to be used by the UE in the NES mode period may be set to be relatively long, and/or the numbers of available ROs and RARs corresponding to the ROs may be set to be relatively reduced based on a specific time point determined according to the periodicity.

And/or, in the proposed method, a method may be used in which an RO allowed time point is determined according to an SSB transmission pattern in the NES mode period. In this case, different RO configuring schemes may be used in a non-NES mode period and an NES mode period. For example, a time period in which transmission and reception of a PRACH are allowed using an RO in the NES mode period may be determined such that a window for the RACH purpose is configured based on an SSB transmission and reception period occurring periodically (or according to a pattern) in the NES mode period, and the UE may assume whether the RACH operation using an RO is available only within the corresponding period.

**Measurement requirement**

The UE needs to perform RRM measurement for an intra/inter cell periodically in the idle/inactive state. For this purpose, the UE needs to receive an SSB periodically and perform a measurement operation for the SSB. On the other hand, for the BS that may perform an NES operation, the transmission periodicity of the SSB may vary depending on whether the NES operation is performed. In consideration of this, the present disclosure proposes a method of performing a measurement requirement differently by a UE depending on whether a BS supports or applies the NES mode. As a specific method, one of the following options 3-2-x may be selected and used.

**(Option 3-2-A) Configuring measurement requirement in consideration of SSB transmission pattern**

The UE may perform an intra/inter cell measurement operation by considering an SSB transmission pattern determined depending on an NES mode period or a non-NES mode period. For example, when a measurement period required in the non-NES mode period is shorter than an SSB period used in the NES mode period, the UE may be configured to perform measurement based on the SSB period in the NES mode period. This may be for the purpose of preventing unnecessary camp-on cell switching by adjusting the RRM measurement period based on an SSB measurable by the UE.

Alternatively, when the measurement period required in the non-NES mode period is longer than the SSB period used in the NES mode period, the UE may be configured to maintain the same measurement period regardless of whether the NES mode period is applied. This may provide the advantageous effect of fast finding a camp-on cell suitable for transmission and reception by allowing the UE to perform RRM measurement with a normal period, when RRM measurement is possible.

**(Option 3-2-A) Configuring measurement requirement in consideration of paging cycle**

The UE may perform an intra/inter cell measurement operation by considering a paging DRX cycle determined depending on whether an NES mode period is applied. For example, when a paging DRX cycle required in the non-NES mode period is different from a paging DRX cycle used in the NES mode period, the UE may be configured to perform measurement based on the periodicity of the paging DRX cycle in each period. This may be a suitable method, considering that the BS may be expected to provide an SSB according to PO and PEI-O periodicities to support a smooth paging and PEI operation even in the NES mode period, and considering the purpose of preventing unnecessary power consumption by aligning a PEI/paging monitoring operation and an RRM measurement operation of the UE.

**TRS availability indication**

The 3GPP Rel-17 NR standard introduced a TRS configuration and transmission/reception procedure in which an idle/inactive UE may expect to receive a TRS, for power saving. It may be advantageous for the BS not to perform a TRS transmission in an NES mode period in terms of energy saving. On the other hand, considering that the TRS is used for time/frequency resynchronization and tracking by an idle/inactive UE, the UE may need a clear understanding of how the TRS may be assumed to be transmitted and received in the NES mode period. In addition, when PDCCH/PDSCH transmission and reception occurs in the NES mode period, TRS transmission and reception may be advantageous to the idle/inactive UE. Considering this, the present disclosure proposes a TRS configuring method and structure that allows a UE to assume transmission and reception in an NES mode period.

In a specific method, when an NES mode period starts in a TRS available period (i.e. a period indicated as allowing the idle/inactive UE to assume promised TRS transmission and reception) indicated in a non-NES mode period, the UE may be configured not to assume the indicated TRS available period any longer from a boundary where the NES mode period starts. This may be advantageous in that the TRS transmission energy efficiency of the BS will be greatly reduced relative to the power saving effect of the UE, on the assumption that when the BS starts the NES mode, a PDCCH and a PDSCH will not occur or will occur with a low probability.

Another specific method may be considered, in which a TRS transmission pattern in the NES mode period is applied differently from a TRS transmission method in the non-NES mode period. For example, it may be defined that the transmission/reception structure of a TRS available period of the idle/inactive UE designed in Rel-17 NR is assumed for the non-NES mode period, whereas a new TRS available period is configured and used in the NES mode period. In this case, it may be configured that a method of activating the new TRS available period is the same as the method of activating a TRS for an idle/inactive UE, defined in Rel-17 NR, and when activated, the TRS available period may be expected to occur in a non-continuous structure, only when a pre-agreed specific condition is satisfied. In a specific example, the new TRS available period may be defined in the form of a specific window determined based on a PEI-O or PO of the UE. The proposed method has the advantage of ensuring flexibility in TRS control of the BS and increasing the power saving effect of the UE by allowing the BS to control whether to transmit or receive a TRS through L1 signaling, while guaranteeing limited TRS transmission and reception in a period where the UE mainly needs the TRS.

FIG. 13 is a diagram illustrating signal transmission and reception in a network system according to an embodiment. For understanding of FIG. 13, the descriptions of proposal 1 to proposal 3 may be referred to.

Referring to FIG. 13, a UE may receive an NES-related configuration from a network (1005). The NES-related configuration may include configuration information for a UE operation which is required when NES is performed. The NES-related configuration may be received through higher layer signaling. The NES-related configuration may be, for example, information for notifying a UE that a BS temporarily activates/deactivates a signal and channel transmission/-reception operation for the purpose of energy saving of the BS, and for being used for the UE to expect reception of a signal and channel transmitted by the BS or supporting transmission of a signal and channel from the UE to the BS. In a specific example, the NES-related configuration may include information such as a cell DRX/DRX pattern, and may also include activation/deactivation independent or distinguished according to the type of a signal and channel or for UL and DL, and individual detailed operations. For example, the NES-related configuration may include information about the configuration of an NES field included in L1 signaling (e.g., DCI). For example, as illustrated in FIG. 12, a time period in which an NES-related operation is performed may correspond to N DRX cycles (N is a positive integer), and in this case, an N value may be included in the NES-related configuration received through the higher layer signaling. The higher layer signaling for the NES-related configuration may include, but is not limited to, an SIB or connected UE-dedicated RRC signaling.

The UE may monitor a PEI (1015) and receive the PEI from the network (1010). When the PEI is not configured, operations 1010 and 1015 related to the PEI may be omitted. The PEI may be for early indicating whether the UE should monitor paging DCI in a PO. For example, the PEI may include information about an NES-related operation to be performed by the UE in the RRC idle/inactive state. The PEI may also early indicate whether information about an NES-related operation is included in the paging DCI.

The UE may receive paging DCI (1020) by monitoring the paging DCI in a PO of a DRX on-duration (1025). For example, the paging DCI may include information about the NES-related operation to be performed by the UE in the RRC idle/inactive state.

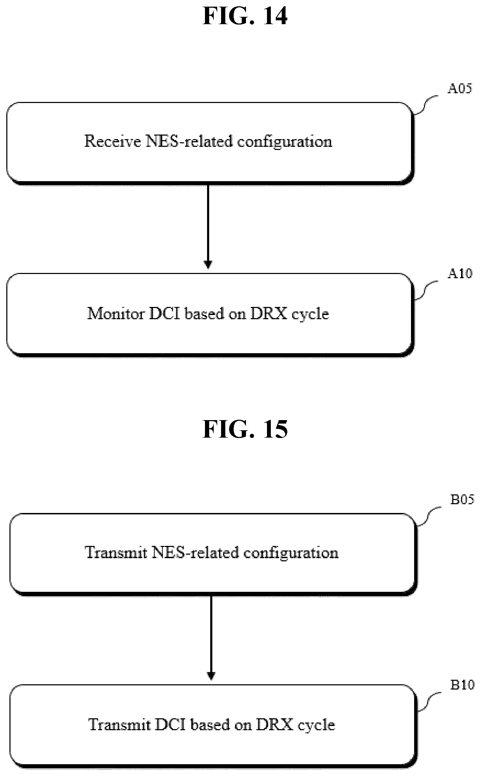

FIG. 14 is a diagram illustrating signal reception of a UE according to an embodiment.

Referring to FIG. 14, the UE may receive an NES-related configuration from a network (A05). The NES-related configuration may be, for example, information for notifying a UE that a BS temporarily activates/deactivates a signal and channel transmission/reception operation for the purpose of energy saving of the BS, and for being used for the UE to expect reception of a signal and channel transmitted by the BS or supporting transmission of a signal and channel from the UE to the BS. In a specific example, the NES-related configuration may include information such as a cell DRX/DRX pattern, and may also include activation/deactivation independent or distinguished according to the type of a signal and channel or for UL and DL, and individual detailed operations.

The UE may monitor DCI based on a DRX cycle in an RRC idle/inactive state (A10).

A time period in which the NES-related configuration is to be applied in the RRC idle/inactive state may be determined based on an integer multiple of the DRX cycle.

The length of the time period in which the NES-related configuration is to be applied may be an integer multiple of the length of the DRX cycle.

The DCI may be DCI for paging, and the DRX cycle may be a period in which the UE monitors a PO.

In the integer multiple of the DRX cycle, the multiple may be determined based on signaling from the network.

The start of the time period in which the NES-related configuration is to be applied may be determined based on the PO monitored by the UE.

The time period in which the NES-related configuration is to be applied may be configured based on a discontinuous pattern in the time domain.

The DCI may include information about an NES-related operation to be performed by the UE in the RRC idle/inactive state. The UE may receive a PEI for early indicating whether the information about the NES-related operation is included in the DCI.

The UE may receive a PEI for early indicating whether the DCI is to be monitored. The PEI may include the information about an NES-related operation to be performed by the UE in the RRC idle/inactive state.

FIG. 15 is a diagram illustrating signal transmission of a BS according to an embodiment.

Referring to FIG. 15, the BS may transmit an NES-related configuration (B05). The NES-related configuration may be, for example, information for notifying a UE that a BS temporarily activates/deactivates a signal and channel transmission/reception operation for the purpose of energy saving of the BS, and for being used for the UE to expect reception of a signal and channel transmitted by the BS or supporting transmission of a signal and channel from the UE to the BS. In a specific example, the NES-related configuration may include information such as a cell DRX/DRX pattern, and may also include activation/deactivation independent or distinguished according to the type of a signal and channel or for UL and DL, and individual detailed operations.

The BS may transmit DCI based on a DRX cycle to a UE in an RRC idle/inactive state (B10).

A time period in which the NES-related configuration is to be applied for the UE in the RRC idle/inactive state may be determined based on an integer multiple of the DRX cycle.

The length of the time period in which the NES-related configuration is to be applied may be an integer multiple of the length of the DRX cycle.

The DCI may be DCI for paging, and the DRX cycle may be a period in which the UE monitors a PO.

The BS may signal the multiple of the integer multiple of the DRX cycle to the UE.

The start of the time period in which the NES-related configuration is to be applied to the UE may be determined based on the PO monitored by the UE.

The time period in which the NES-related configuration is to be applied may be configured based on a discontinuous pattern in the time domain.

The DCI may include information about an NES-related operation to be performed by the UE in the RRC idle/inactive state. The BS may transmit, to the UE, a PEI for early indicating whether the information about the NES-related operation is included in the DCI.

The BS may transmit, to the UE, a PEI for early indicating whether the DCI is to be monitored. The PEI may include the information about an NES-related operation to be performed by the UE in the RRC idle/inactive state.

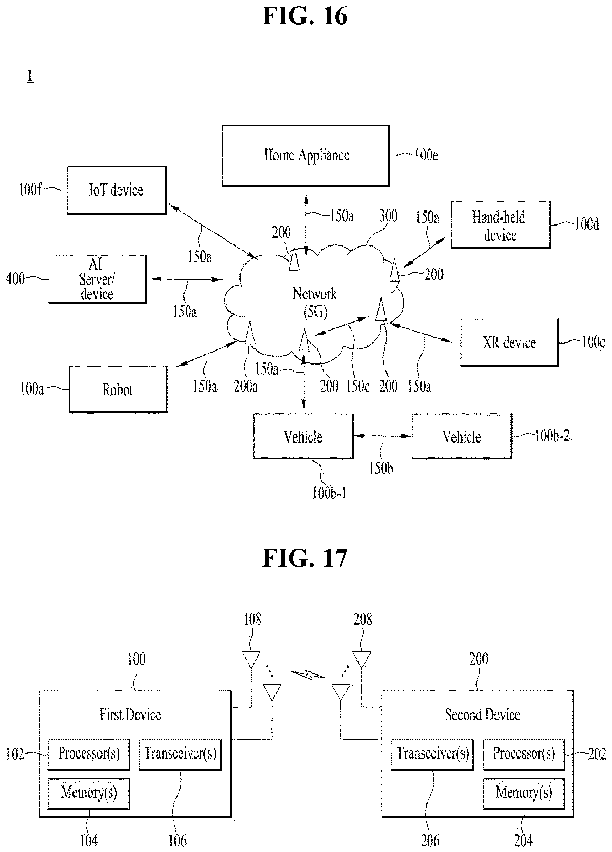

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

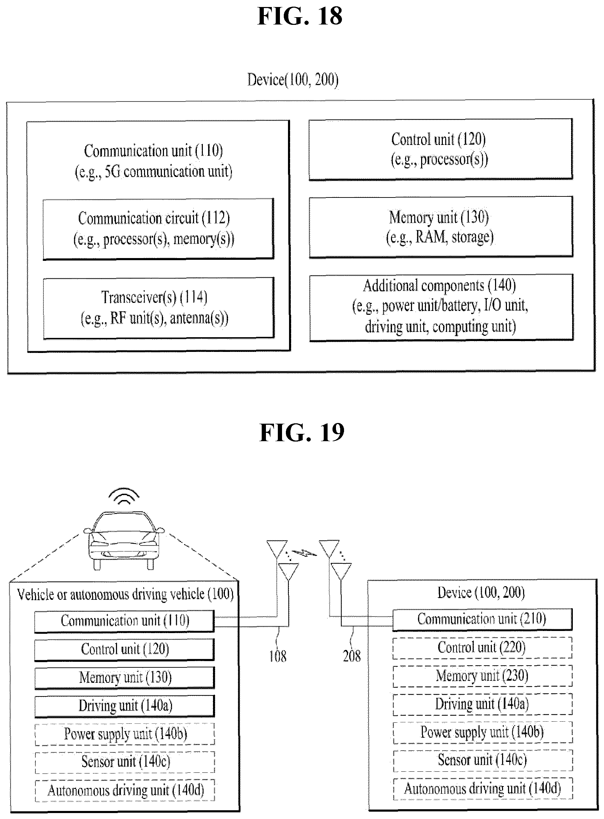

FIG. 18 illustrates another example of a wireless device applied to the present disclosure. The wireless device may be implemented in various forms according to a use-case/service (refer to FIG. 16).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

**1.** A method of receiving a signal by a user equipment (UE) in a wireless communication system, the method comprising:

receiving a network energy saving (NES)-related configuration from a network; and

monitoring downlink control information (DCI) based on a discontinuous reception (DRX) cycle in an radio resource control (RRC) idle/inactive state,

wherein a time period in which the NES-related configuration is to be applied in the RRC idle/inactive state is determined based on an integer multiple of the DRX cycle.

2. The method of claim 1, wherein a length of the time period in which the NES-related configuration is to be applied is an integer multiple of a length of the DRX cycle.

3. The method of claim 1, wherein the DCI is DCI for paging, and
wherein the DRX cycle is a period in which the UE monitors a paging occasion (PO).

4. The method of claim 1, wherein in the integer multiple of the DRX cycle, the multiple is determined based on signaling from the network.

5. The method of claim 1, wherein a start of the time period in which the NES-related configuration is to be applied is determined based on a paging occasion (PO) monitored by the UE.

6. The method of claim 1, wherein the time period in which the NES-related configuration is to be applied is configured based on a discontinuous pattern in a time domain.

7. The method of claim 1, wherein the DCI includes information about an NES-related operation to be performed by the UE in the RRC idle/inactive state.

8. The method of claim 7, further comprising:
receiving a paging early indication (PEI) for early indicating whether the information about the NES-related operation is included in the DCI.

9. The method of claim 1, further comprising:

receiving a PEI for early indicating whether the UE is to monitor the DCI,
wherein the PEI includes information about an NES-related operation to be performed by the UE in the RRC idle/inactive state.

10. A computer-readable recording medium recording a program for performing the method of claim 1.

11. A device for wireless communication, the device comprising:

a memory configured to store instructions; and
a processor configured to perform operations by executing the instructions,
wherein the operations include:

receiving a network energy saving (NES)-related configuration from a network; and
monitoring downlink control information (DCI) based on a discontinuous reception (DRX) cycle in an radio resource control (RRC) idle/inactive state, and
wherein a time period in which the NES-related configuration is to be applied in the RRC idle/inactive state is determined based on an integer multiple of the DRX cycle.

12. The device of claim 11, further comprising:

a transceiver transmitting or receiving a wireless signal under control of the processor,
wherein the device is a user equipment (UE) operating in a wireless communication system.

13. The device of claim 11, wherein the device is an application specific integrated circuit (ASIC) or a digital signal processing device configured to control a UE operating in a wireless communication system.

14. A method of transmitting a signal by a base station (BS) in a wireless communication system, the method comprising:

transmitting a network energy saving (NES)-related configuration; and

transmitting downlink control information (DCI) based on a discontinuous reception (DRX) cycle to a user equipment (UE) in an radio resource control (RRC) idle/inactive state,

wherein a time period in which the NES-related configuration is to be applied for the UE in the RRC idle/inactive state is determined based on an integer multiple of the DRX cycle.

15. A base station (BS) for wireless communication, the BS comprising:

a memory configured to store instructions; and

a processor configured to perform operations by executing the instructions,

wherein the operations include:

transmitting a network energy saving (NES)-related configuration; and

transmitting downlink control information (DCI) based on a discontinuous reception (DRX) cycle to a user equipment (UE) in an radio resource control (RRC) idle/inactive state, and

wherein a time period in which the NES-related configuration is to be applied for the UE in the RRC idle/inactive state is determined based on an integer multiple of the DRX cycle.

# FIG. 1

Initial Cell Search — PSS/SSS & [DLRS] & PBCH — S11

System Information Reception — PDCCH/ PDSCH (BCCH) — S12

Random Access Procedure — PRACH S13 / PDCCH/ PDSCH S14 / PRACH S15 / PDCCH PDSCH S16

General DL/UL Tx/Rx S18 — PDCCH/ PDSCH S17 / PUSCH/ PUCCH

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms) ...... Subframe 4 (1ms)    Subframe 5 (1ms) ...... Subframe 9 (1ms)

Subframe (1ms)

15KHz    Slot (14 symbols)
1ms

30KHz    Slot 0 (14 symbols) | Slot 1
500us

60KHz    Slot 0 (14 symbols) | Slot 1 | Slot 2 | Slot 3
250us

120KHz    Slot 0 (14 symbols) | Slot 1 | Slot 2 | Slot 3 | Slot 4 | Slot 5 | Slot 6 | Slot 7
125us

# FIG. 3

Resource grid

A carrier
(up to 3300 subcarriers, i.e., 275 RBs)

A BWP

1 RB = 12 subcarriers

1 RE

1 subcarrier

1 symbol

# FIG. 4

# FIG. 5

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

UE shall monitor
PDCCH

On Duration

Opportunity for DRX

DRX Cycle

# FIG. 9

ON duration (wake-up mode)

PO                    PO

Sleep mode

DRX cycle

power

time

# FIG. 10

eDRX cycle

PTW    Power saving mode    PTW

| DRX cycle | ... | DRX cycle | ... | DRX cycle | DRX cycle |

power

time

# FIG. 11

WUS duration

WUS                         PO

Configured maximum
WUS duration        Gap

power

time

# FIG. 12

NES related UE operation

# FIG. 13

# FIG. 14

Receive NES-related configuration — A05

Monitor DCI based on DRX cycle — A10

# FIG. 15

Transmit NES-related configuration — B05

Transmit DCI based on DRX cycle — B10

# FIG. 16

# FIG. 17

# FIG. 18

Device(100, 200)

| | |
|---|---|
| Communication unit (110)<br>(e.g., 5G communication unit) | Control unit (120)<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 19

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
| --- |
| **PCT/KR2023/095036** |

| A. | CLASSIFICATION OF SUBJECT MATTER |
| --- | --- |

**H04W 52/02**(2009.01)i; **H04W 68/02**(2009.01)i; **H04L 5/00**(2006.01)i; **H04W 56/00**(2009.01)i

According to International Patent Classification (IPC) or to both national classification and IPC

| B. | FIELDS SEARCHED |
| --- | --- |

Minimum documentation searched (classification system followed by classification symbols)

H04W 52/02(2009.01); H04W 16/32(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NES(network energy saving), RRC(radio resource control) 아이들/비활성(Idle/Inactive), DRX 사이클(discontinuous reception cycle), DCI(downlink control information), 정수배(integer multiples)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y<br>A | SAMSUNG. Network Energy Saving (NES) Techniques. R2-2208593, 3GPP TSG RAN WG2 Meeting #119-e. 10 August 2022.<br>See pages 1-2. | 1-7,10-15<br>8,9 |
| Y | QUALCOMM INC. Network energy saving techniques. R2-2208120, 3GPP TSG RAN WG2 Meeting #119-e. 10 August 2022.<br>See pages 1-2. | 1-7,10-15 |
| Y | KR 10-2020-0028822 A (KT CORPORATION) 17 March 2020 (2020-03-17)<br>See paragraphs [0097]-[0103]; and figures 10-11. | 3 |
| A | INTERDIGITAL. Time domain NES techniques. R2-2207246, 3GPP RAN WG2 Meeting #119-e. 10 August 2022.<br>See pages 1-3. | 1-15 |
| A | US 2012-0244869 A1 (SONG, Bongyong et al.) 27 September 2012 (2012-09-27)<br>See paragraphs [0105]-[0111]; and figures 11-13. | 1-15 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be |
| "E" | earlier application or patent but published on or after the international filing date | considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 November 2023** | **24 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/095036**

| Patent document cited in search report | | | Publication date (day/month/year) | Patent family member(s) | | | Publication date (day/month/year) |
|---|---|---|---|---|---|---|---|
| KR | 10-2020-0028822 | A | 17 March 2020 | CN | 110881210 | A | 13 March 2020 |
| | | | | CN | 110881210 | B | 14 April 2023 |
| | | | | KR | 10-2372989 | B1 | 14 March 2022 |
| | | | | US | 10681673 | B2 | 09 June 2020 |
| | | | | US | 11076382 | B2 | 27 July 2021 |
| | | | | US | 2020-0084747 | A1 | 12 March 2020 |
| | | | | US | 2020-0260411 | A1 | 13 August 2020 |
| US | 2012-0244869 | A1 | 27 September 2012 | CN | 103460766 | A | 18 December 2013 |
| | | | | EP | 2689613 | A1 | 29 January 2014 |
| | | | | JP | 2014-509166 | A | 10 April 2014 |
| | | | | WO | 2012-129188 | A1 | 27 September 2012 |

Form PCT/ISA/210 (patent family annex) (July 2022)

38